(19) Europäisches Patentamt
European Patent Office
Office européen des brevets

(11) Publication number: 0 095 127
B1

(12) EUROPEAN PATENT SPECIFICATION

(45) Date of publication of patent specification: 06.08.86

(51) Int. Cl.[4]: G 03 C 5/54 // C09B27/00

(21) Application number: 83104850.9

(22) Date of filing: 17.05.83

# (54) Photographic recording material employing a nondiffusible cyan dye-releasing compound or precursor thereof.

(30) Priority: 21.05.82 US 380844

(43) Date of publication of application:
30.11.83 Bulletin 83/48

(45) Publication of the grant of the patent:
06.08.86 Bulletin 86/32

(84) Designated Contracting States:
DE FR GB

(56) References cited:
EP-A-0 045 633
EP-A-0 095 324
US-A-4 204 993

(73) Proprietor: EASTMAN KODAK COMPANY
343 State Street
Rochester New York 14650 (US)

(72) Inventor: Reczek, James A.
393 True Hickory Drive
Rochester New York 14615 (US)
Inventor: Elwood, James K.
990 Racoon Run
Victor New York 14564 (US)

(74) Representative: Brandes, Jürgen, Dr.rer.nat. et al
Thierschstrasse 8
D-8000 München 22 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a photographic recording material employing a novel nondiffusible cyan dye-releasing compound which, as a function of development of a silver halide emulsion layer, releases a diffusible cyan dye. The dye-releasing compound can be premetallized or a metal complex of the released dye can be formed in an image-receiving layer.

U.S. Patent 4,142,891 relates to various nondiffusible azo dye-releasing compounds including compounds having a releasable 6-arylazo-3-pyridinol dye moiety. However, these prior art dyes are not entirely suitable for commercial use due to their relatively broader band widths and unwanted absorption below 600nm. Cyan compounds in the 4,142,891 patent are obtained when the phenyl nucleus has a nitro group para to the azo linkage. In contrast, the compounds of the instant invention have a heterocyclic fused ring nucleus instead of a phenyl or naphthyl nucleus. In addition, the cyan dyes of this invention have excellent hues and less unwanted absorption below 600 nm than dyes shown in the '891 patent, as will be illustrated by comparative tests shown hereinafter.

The object of this invention is to provide improved cyan dye-releasing compounds containing chelating dye moieties, so that the dye which is released imagewise during processing, which can be premetallized or metallizable, can diffuse to an image-receiving layer to form a metal-complexed, dye transfer image having narrower bandwidth, minimum unwanted absorption outside the red region of the spectrum, better hue, rapid diffusion rate and shorter access time than those of the prior art, as well as good stability to heat, light and chemical reagents.

A photographic recording material in accordance with this invention comprises at least one photosensitive silver halide emulsion layer having associated therewith a dye image-providing material comprising a nondiffusible compound containing a ballasted carrier moiety which is capable of releasing, under alkaline conditions, at least one diffusible cyan dye moiety comprising a 6-heterocyclylazo-3-pyridinol, said dye image-providing material having the following formula:

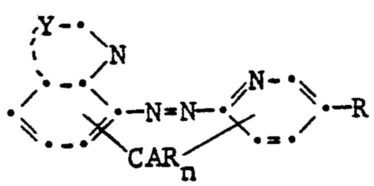

wherein:

the pyridinol ring may be unsubstituted or substituted;

(a) Y represents the atoms necessary to complete a 9- or 10-membered aromatic heterocyclic fused ring system which can be unsusbtituted or substituted; with the proviso that the carbocyclic ring of said heterocyclylazo moiety is free of hydroxy groups, or precursors thereof, in the position para to the azo group;

(b) CAR represents a ballasted carrier moiety capable of releasing the diffusible cyan dye moiety as a function of development of the silver halide emulsion layer under alkaline conditions;

(c) R represents a hydroxy group, a salt thereof, or a hydrolyzable precursor thereof, or CAR which is linked to the dye moiety through an oxygen atom thereon; and

(d) n is 0, 1 or 2 with the proviso that when n is 0, then R is CAR which is linked to the dye moiety through an oxygen atom thereon.

Typical aromatic heterocyclic fused rings which Y, and the ring to which Y is fused can complete, include quinoline, quinoxaline, benzimidazole or indolenine.

Preferably, R is hydroxy and the above-defined fused ring has an electron-withdrawing substituent para to the azo group. This electron-withdrawing substituent can be nitro or $SO_2J$, wherein J is amino, aryloxy of from 7 to 12 carbon atoms, alkyl or alkoxy having from 1 to 12 carbon atoms or aryl of 6 to 10 carbon atoms. In a particular preference R is hydroxy, Y represents the atoms necessary to complete a quinoline ring having a COOH group in the 2-position, the pyridine ring has an amino group in the 2-position, n is 1 and CAR is attached to the pyridine ring.

As stated above, R can be a hydroxy group, a salt thereof, such as a sodium salt or a tetramethylammonium salt, a hydrolyzable precursor thereof or CAR. Hydrolyzable precursors of a hydroxy group include acetate, benzoate, pivalate, carbamates, an acyloxy group having the formula $-OCOR_1$, $-OCOOR_1$ or $-OCON(R_1)_2$, wherein each $R_1$ is an alkyl group having 1 to 8 carbon atoms, such as methyl, ethyl, isopropyl or butyl, or an aryl group having from 6 to 12 carbon atoms, such as phenyl, or any of the blocking groups which can be cleaved by an intramolecular nucleophilic displacement reaction, as disclosed in U.S. Patent 4,310,612.

When R is CAR or a hydrolyzable precursor of a hydroxy group, the absorption of the dye-releasing compound is shifted out of the red region of the spectrum. As a result of this shift the dye-releasing compound can be incorporated in the silver halide emulsion layer.

In another embodiment CAR can have attached thereto two azo dye moieties in which case two dye moieties will be released from one CAR moiety.

Substituents can be present in the two rings illustrated above. These include alkyl or acyl of 1 to 6 carbon atoms, aryl of 6 to 10 carbon atoms, aralkyl of 7 to 12 carbon atoms, amino, alkylsulfonyl, alkoxy wherein the alkyl moiety has from 1 to 6 carbon atoms, halogens such as chloro or bromo, morpholino, phenylsulfamoyl, solubilizing groups such as sulfonamido, sulfamoyl, carboxy, sulfo or hydrolyzable precursors thereof.

In another preferred embodiment the dye-releasing compounds described above can be premetallized, i.e., they can comprise a coordination complex of the nondiffusible compounds and a polyvalent metal ion. In a further preferred embodiment of the invention, the coordination complex comprises a 2:1 complex of the nondiffusible compound and a divalent or trivalent hexacoordinate metal ion. Such metal ions include zinc(II), nickel(II), copper(II), cobalt(II) and cobalt(III). Especially good results are obtained with nickel(II) ions.

There is great latitude in selecting a CAR moiety which is attached to the dye-releasing compounds described above. Depending upon the nature of the ballasted carrier selected, various groups may be needed to attach or link the carrier moiety to the dye. Such linking groups are considered to be a part of the CAR moiety in the above definition. It should also be noted that, when the dye moiety is released from the compound, cleavage may take place in such a position that part or all of the linking group, if one is present, and even part of the ballasted moiety, may be transferred to the image-receiving layer along with the dye moiety. In any event, the dye nucleus as shown above can be thought of as the minimum which is transferred.

CAR moieties useful in the invention are described below:

| Dye Release Mechanism | Prior Art Reference |
|---|---|
| by chromogenic coupling | U.S. Patents 3,227,550; 3,227,552; 3,628,952 and 3,844,785 |
| by intramolecular ring closure | U.S. Patents 3,443,939 and 3,443,940 |
| from hydroquinone derivatives | U.S. Patents 3,698,897 and 3,725,062 |
| from a hydroquinonylmethyl quaternary salt | U.S. Patent 3,728,113 |
| silver ion induced dye release | U.S. Patents 3,443,941 and 3,719,489 |
| by a dye bleach process | U.K. Patent Publication 2,017,950A |
| by oxidation and deamidation | U.S. Patents 3,928,312; 3,993,638; 4,053,312; 4,055,428; 4,076,529; 4,149,892; 4,179,231 and 4,198,235 |
| | Research Disclosure |
| by miscellaneous mechanisms | 14447, April 1976; U.S. Patents 3,980,479; 4,139,379; 4,199,354 and 4,232,107 and European Patent Publication 12908. |

When R is CAR, linkage must be to the dye moiety through an oxygen atom thereon, so that a pyridinol is released from the nondiffusible compound under alkaline conditions. Such CARs are disclosed, for example, in U.S. Patent 4,139,379 noted above.

Representative dye-releasing compounds useful in this invention include the following:

Metallizable Compounds

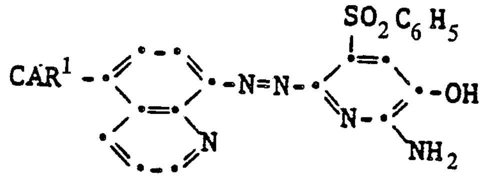
(1)

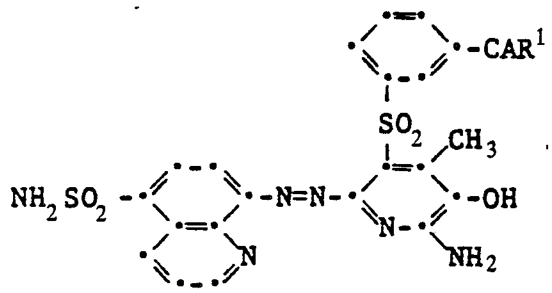
(2)

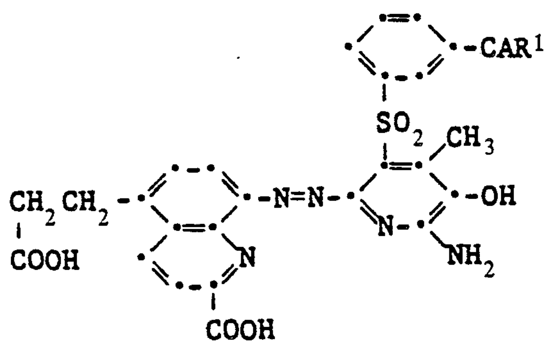
(3)

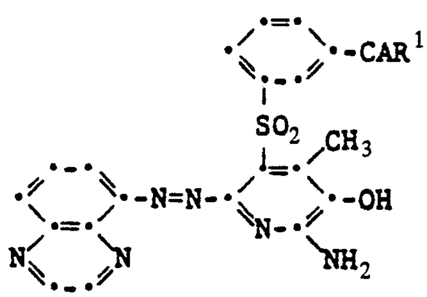
(4)

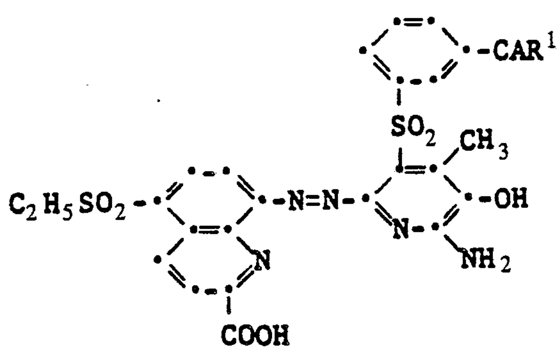
(5)

wherein $CAR^1$ is

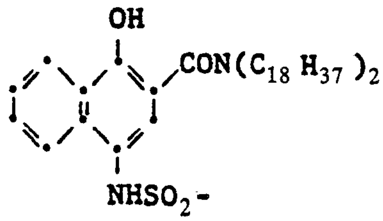

Compounds 6-13

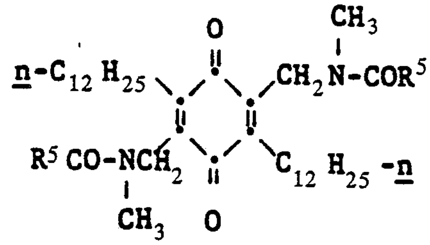

wherein

$R^5$ is (6)

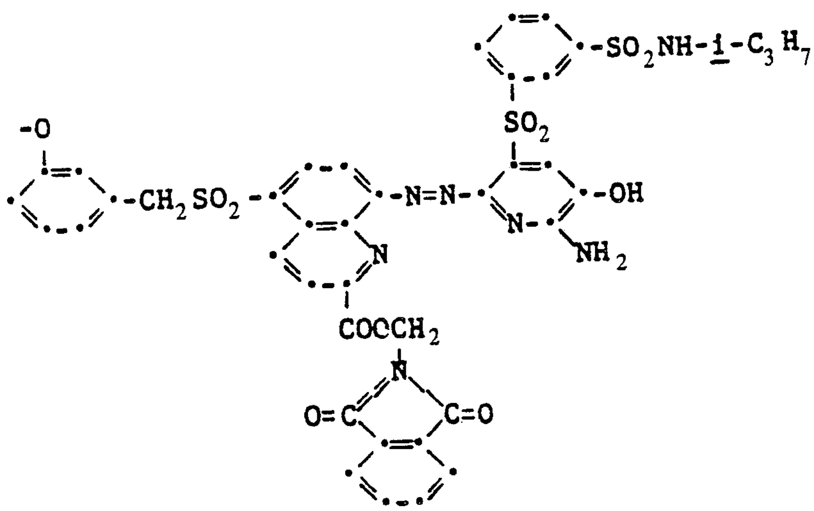

$R^5$ is (7)

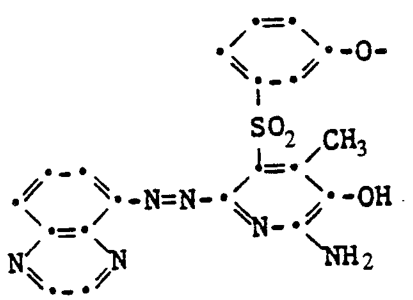

$R^5$ is (8)

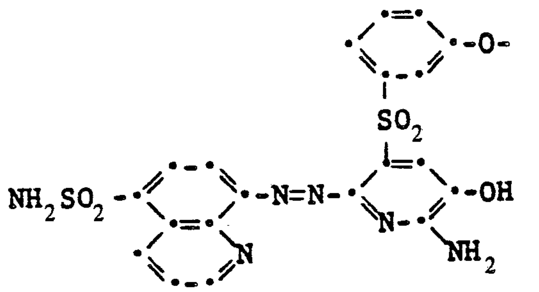

$R^5$ is (9)

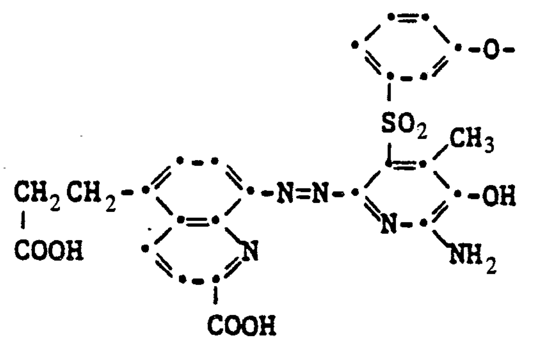

$R^5$ is (10)

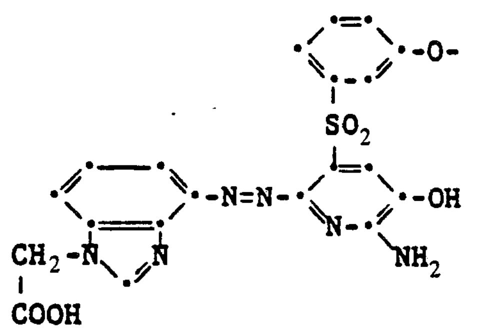

$R^5$ is (11)

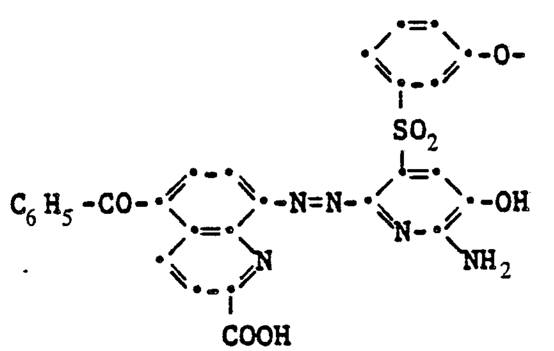

$R^5$ is (12)

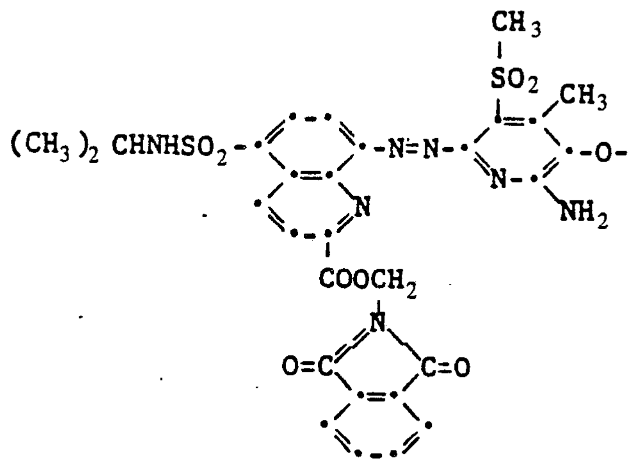

$R^5$ is (13)

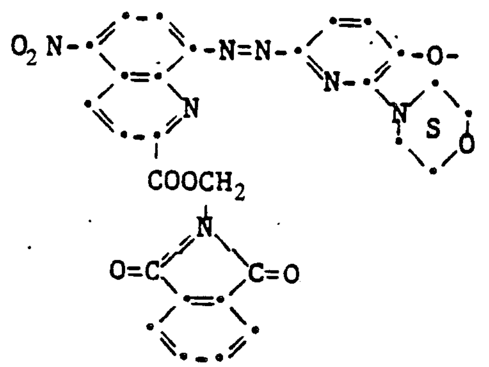

Compound 14

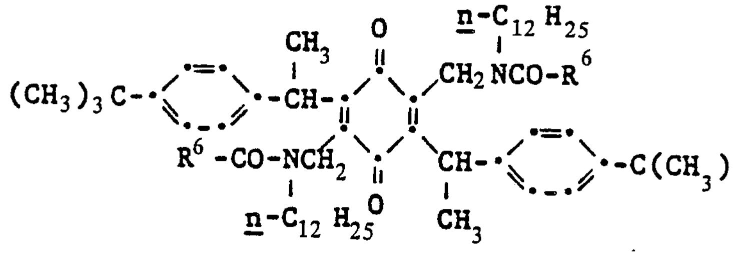

wherein $R^6$ is

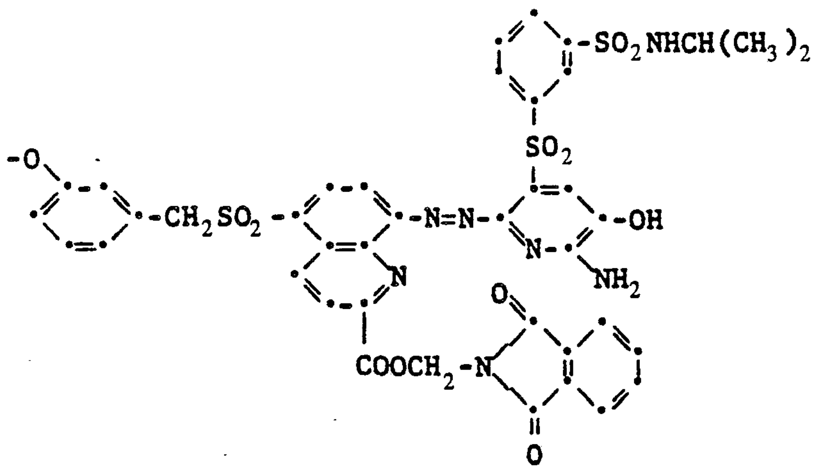

Premetallized Compounds

Compounds 15-20

(15)

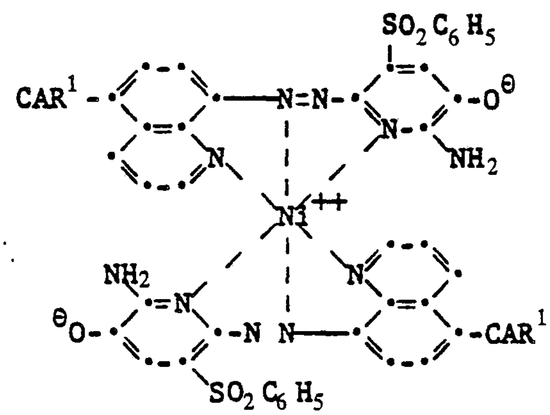

(16)

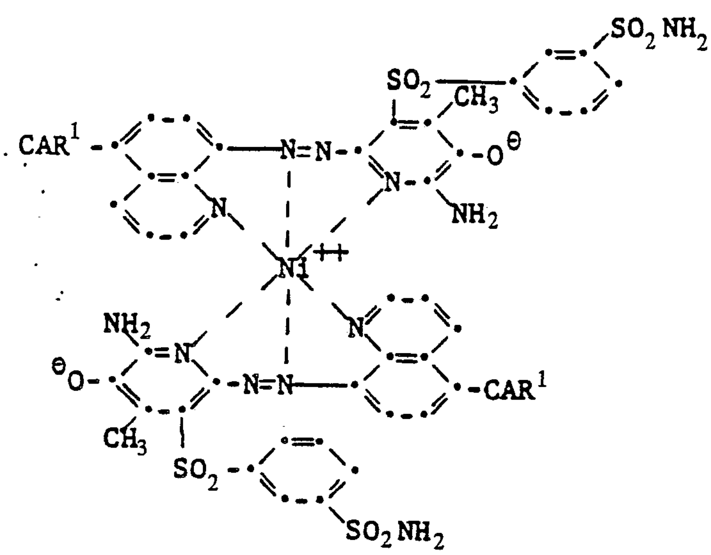

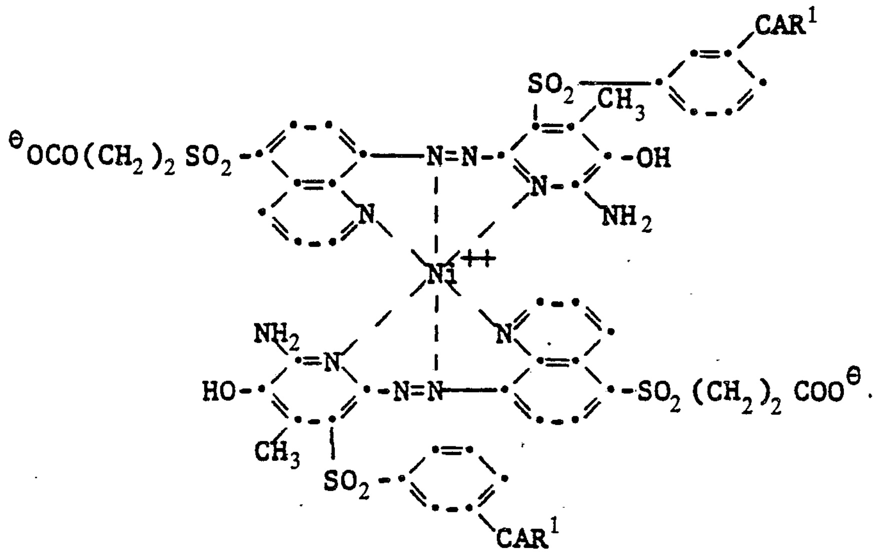

(17)

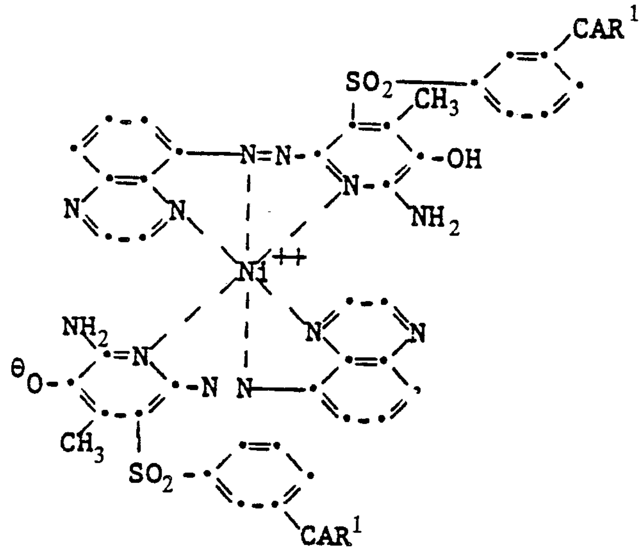

(18)

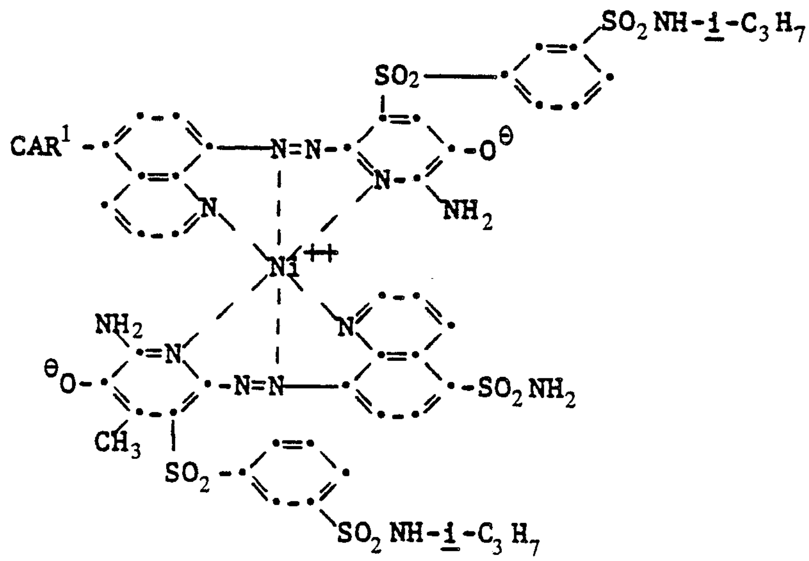

(19)

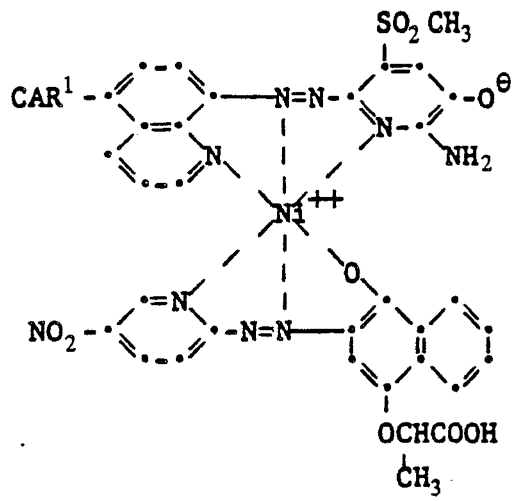

(20)

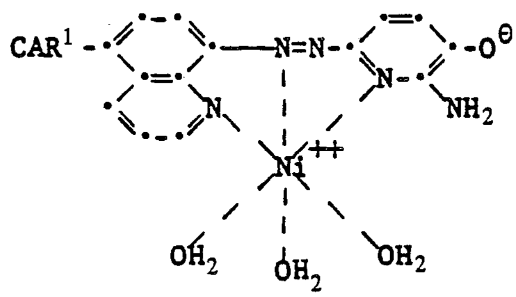

(21)

wherein $CAR^1$ is

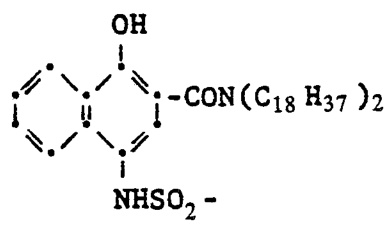

Compounds 22-23

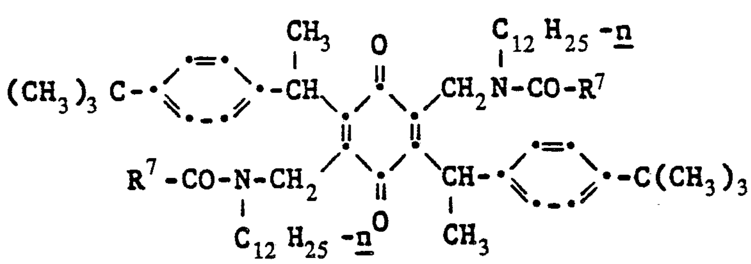

wherein $R^7$ is

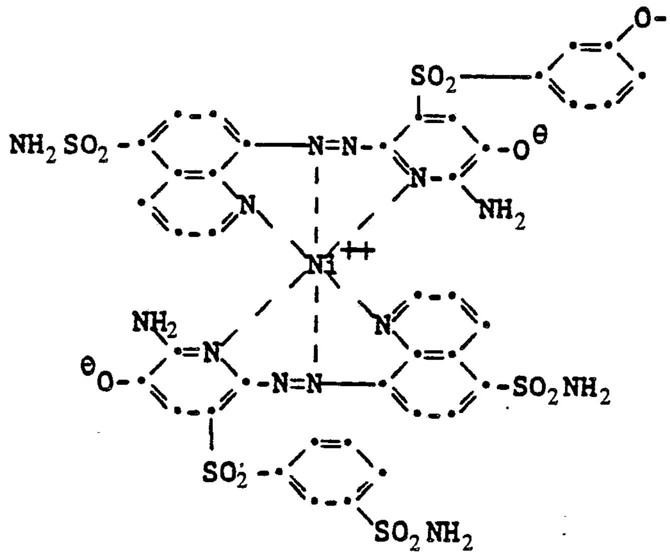

(22)

wherein $R^7$ is

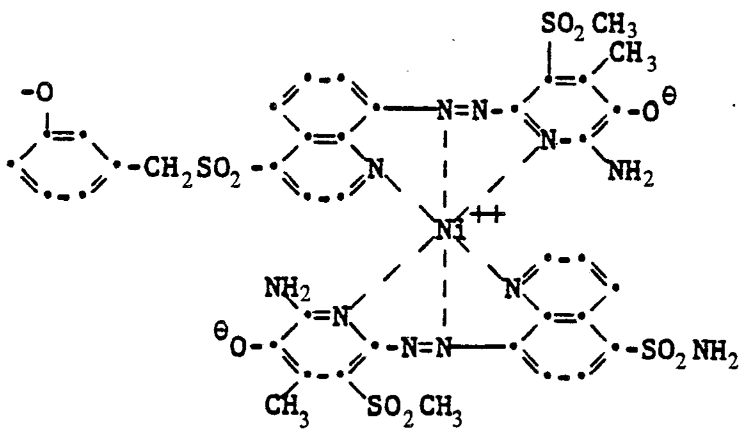

(23)

Compound 24

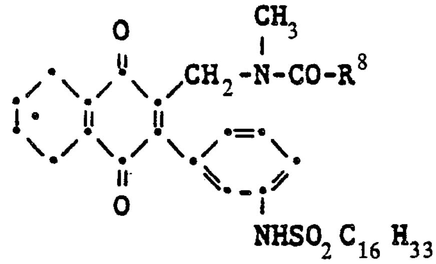

wherein $R^8$ is

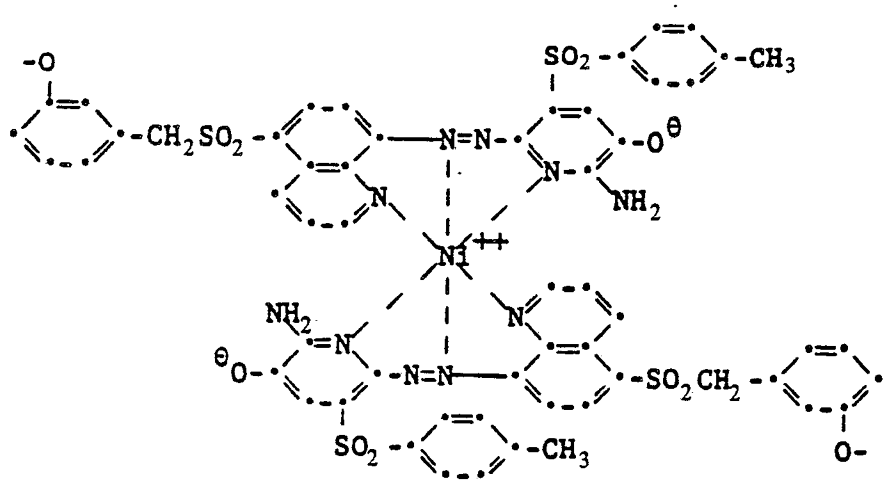

Compound 25

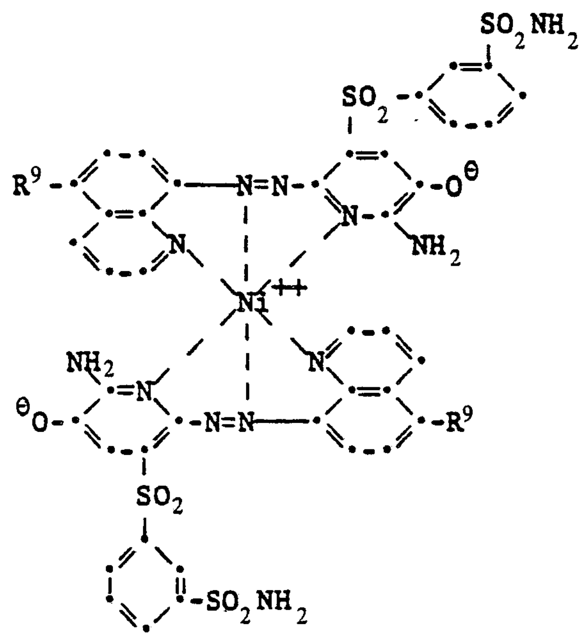

wherein $R^9$ is

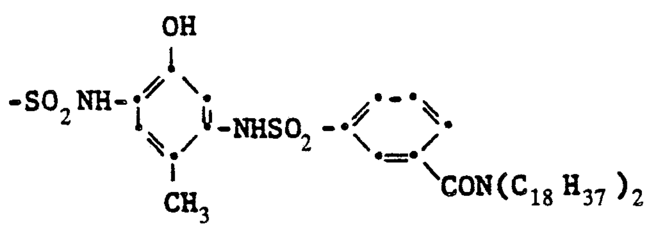

A process for producing a photographic transfer image in color utilizing photographic recording materials as described herein comprises:

(a) treating such a recording material having a metallizable dye-releasing compound with an alkaline processing composition in the presence of a silver halide developing agent to effect development of each exposed silver halide emulsion layer;

(b) the dye-releasing compound then releasing the diffusible azo dye imagewise as a function of the development of each of the silver halide emulsion layers;

(c) at least a portion of the imagewise distribution of the azo dye diffusing to a dye image-receiving layer; and

(d) contacting the imagewise distribution of azo dye with metal ions, thereby forming a metal-complexed azo dye transfer image.

The cyan azo dye moiety which is released from the metallizable dye-releasing compounds described above is a tridentate ligand. This ligand will form a coordination complex in the image-receiving layer with polyvalent metal ions. The metal ions can be present in the image-receiving layer itself or in a layer adjacent thereto. Alternatively, the image-receiving layer can be contacted with metal ions in a bath after diffusion of the dye has taken place. Metal ions most useful in the invention are those which are essentially colorless when incorporated into the image-receiving element, are inert with respect to the silver halide layers, react readily with the released dye to form a complex of the desired hue, are tightly coordinated to the dye in the complex, have a stable oxidation state, and form a dye complex which is stable to heat, light and chemical reagents. Good results are obtained with polyvalent metal ions such as copper (II), zinc (II), nickel (II), platinum (II), palladium (II), cobalt (II) and cobalt (III) ions.

It is believed that the coordination complex which can be formed from the tridentate, metallizable azo dye ligand has the following structural formula:

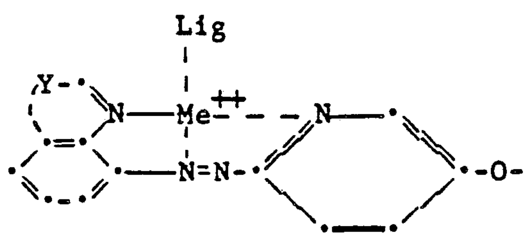

wherein:

Y is as defined above;

Me is metal; and

Lig is one or more ligand groups, depending upon the coordination number of the metal ion, such as $H_2O$, Cl or pyridine, a second dye moiety or a part of a polymer. (A divalent metal ion in solution always has a number of ligand groups attached to it depending upon its coordination number and the relative reactivity of various ligand groups such as water, ammonia, chloride, pyridine or acetate, which may be in the solution environment or the metal ion. These ligands can be displaced by a tridentate azo dye ligand which forms a more stable complex.)

Thus, in accordance with a preferred embodiment a photographic recording material is provided which comprises a support having thereon a coordination complex of a polyvalent metal ion and a compound having the formula:

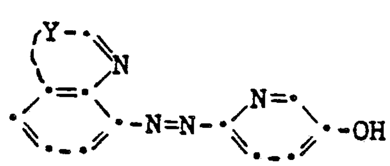

wherein:

Y is as previously described.

The photographic recording material usually contains a photographic mordant or image-receiving layer to bind the dye or coordination complex thereto.

After processing the photographic recording material described above, there remains in it after transfer has taken place an imagewise distribution of azo dye in addition to developed silver. A color image comprising residual nondiffusible compound is obtained in this recording material if the residual silver and silver halide are removed by any conventional manner well known to those skilled in the photographic art, such as a bleach bath, followed by a fix bath or a bleach-fix bath. Such a retained dye image should normally be treated with metal ions to metallize the dyes to increase their light fastness and shift their spectral absorption to the intended region. The imagewise distribution of azo dye may also diffuse out of the recording material into these baths, if desired, rather than to an image-receiving element. If a negative-working silver halide emulsion is employed a positive color image, such as a reflection print, a color

transparency or a motion picture film, is produced in this manner. If a direct-positive silver halide emulsion is employed a negative color image is produced.

The photographic recording material in the above-described process is treated in any manner with an alkaline processing composition to effect or initiate development. The recording material may also comprise a dye image-receiving layer.

The photographic recording material preferably contains the alkaline processing composition and means containing same for discharge within the material. There can be employed, for example, a rupturable container which is adapted to be positioned during processing so that a compressive force applied to the container by pressure-applying members, such as would be found in a camera designed for in-camera processing, will effect a discharge of the container's contents within the recording material.

The dye image-receiving layer may itself contain metal ions or the metal ions may be present in an adjacent layer, so that the tridentate, metallizable azo dye ligand which is released will form a coordination complex therewith. The dye thus becomes immobilized in the dye image-receiving layer and metallized at the same time. Alternatively, the dye image in the dye image-receiving layer may be treated with a solution containing metal ions to effect metallization. The formation of the coordination complex shifts the absorption of the dye to the desired hue, usually to longer wavelengths, which have a different absorption than that of the initial dye-releasing compound. If this shift is large enough, then the dye-releasing compound may be incorporated in a silver halide emulsion layer without adversely affecting its sensitivity. Otherwise the dye-releasing compound can be contained in a layer contiguous to the silver halide emulsion layer. Either conventional negative-working or direct-positive silver halide emulsions can be employed.

The concentration of the dye-releasing compounds that are employed in the present invention may be varied over a wide range, depending upon the particular compound employed and the results which are desired. For example, the dye-releasing compounds may be coated in layers at a concentration of 0.1 to 3 $g/m^2$ by using coating solutions containing between 0.5 and 8 percent by weight of the dye-releasing compound distributed in a hydrophilic film-forming natural material or synthetic polymer, such as gelatin or polyvinyl alcohol, which is adapted to be permeated by aqueous alkaline processing composition.

Preferably, the silver halide developer or electron transfer agent (ETA) employed in the process becomes oxidized upon development and reduces silver halide to silver metal. The oxidized developer than cross-oxidizes the dye-releasing compound. The product of cross-oxidation then undergoes alkaline hydrolysis, thus releasing an imagewise distribution of diffusible azo dye which then diffuses to the receiving layer to provide the dye image. The diffusible moiety is transferable in alkaline processing composition either by virtue of its self-diffusivity or by its having attached to it one or more solubilizing groups, for example, a carboxy, sulpho, sulphonamido, hydroxy or morpholino group.

The term "nondiffusing" used herein has the meaning commonly applied to the term in photography and denotes materials that, for all practical purposes do not migrate or wander through organic colloid layers, such as gelatin, in the photographic recording materials of the invention in an alkaline medium and preferably when proceсssed in a medium having a pH of 11 or greater. The same meaning is to be attached to the term "immobile". The term "diffusible" has the converse meaning and denotes materials having the property of diffusing effectively through the colloid layers of the photographic recording materials in an alkaline medium. "Mobile" has the same meaning as "diffusbile".

The term "associated therewith" is intended to mean that the materials can be in either the same or different layers, so long as the materials are accessible to one another.

The following examples are provided to further illustrate the invention.

### Example 1

### Released Dyes — Spectra, Light Stability and Dye Diffusion Tests

A receiving element was prepared comprising a poly(ethylene terephthalate) film support having thereon a nickel sulfate hexahydrate (0.58 $g/m^2$)/gelatin (1.08 $g/m^2$) metal complexing layer, and a poly(4-vinylpyridine)/gelatin mordant layer (each at 2.15 $g/m^2$).

An alternative receiving element was used with the premetallized dye-complexes. It comprised a poly(ethylene terephthalate) film support having thereon a layer of gelatin (1.1 $g/m^2$) and a mordant layer of poly(styrene-*co*-1-vinylimidazole-*co*-3-benzyl-1-vinylimidazolinium chloride) (50:40:10) (4.5 $g/m^2$) and gelatin (2.2 $g/m^2$).

These receiving elements were immersed in alkaline solutions of the azo dyes listed below in Table I. The elements were removed from the dye solutions, washed in distilled water, placed in a pH 7.0 buffer solution and dried. Transmission spectra obtained on each receiving element of the mordanted dyes were normalized by computer to a density of 1.0. The $\lambda_{max}$ at maximum density, along with the "half bandwidth" (HBW), the wavelength range of the curve at half the maximum density, are recorded in Table I. A narrow HBW generally designates a purer hue.

The above receiving elements at pH 7 were then subjected to 21 days irradiation by a high intensity daylight (HID), 6000W Xenon arc lamp, each element receiving 50,000 lux through a Wratten 2B (ultraviolet) filter at 38°C. The percent fade represents the loss in density at $\lambda_{max}$ after irradiation.

Some of the released dyes in Table I were also subjected to a dye diffusion test. The test involved dissolving the dye in a viscous composition (prepared as noted below) and transferring it through a receiving element which contains an opaque and relecting layer in addition to the mordant layer. The

receiving element for this test had the following composition (coverages are parenthetically given in g/m²):

A transparent poly(ethylene terephthalate) film support coated with

1) a mordant layer of poly(styrene-*co*-N-vinylbenzyl-N-benzyl-N,N-dimethylammonium chloride-*co*-divinylbenzene) (weight ratio 49.5:49.5:1) (2.28) and gelatin (2.28);

2) an opaque layer of carbon black (1.88) in gelatin (1.23);

3) a reflecting layer of titanium dioxide (16.1) in gelatin (2.63); and

4) an overcoat layer of gelatin (4.3).

Dye Diffusion Test

Approximately 0.075 mmol of the unmetallized release dye was dissolved in 10 ml of 0.125 N potassium hydroxide. After the dye was completely dissolved, 20 ml of a viscous composition was added. The resulting solution, stirred for at least 20 minutes, was 0.0025 M in dye at a pH of 13.4. The viscous composition was prepared from 46.2 g potassium hydroxide and 54 g carboxymethylcellulose dissolved in 1200 ml water. The dye solution was then spread between the image-receiving element and a clear polyester cover sheet. This sandwich as then passed between spaced rollers so that the gap containing the viscous solution had a thickness of 102 µm. Measurement of the rate of dye diffusion was commenced at the point at which half of the sandwich, or laminate, had passed through the rollers. The appearance of dye on the mordant was measured at $\lambda_{max}$ as diffuse reflection density vs. time. The reflection density was converted to transmission density. A plot of transmission density, which is proportional to concentration vs. time was derived. Calculation was made of the value of t—1/2 of dye transfer, the time in seconds required to obtain one-half of the maximum transmission density.

Various results from fade tests and/or from dye diffusion tests are reported in Table I.

TABLE I

Release Dyes

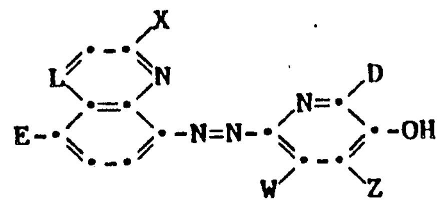

| Cmpd. | E | L | X | D | Z | W | Spectrum of Ni-Dye Complex $\lambda_{max}$ (nm) | HBW (nm) | % Fade | Dye Diffusion $t_{1/2}$ (sec) |
|---|---|---|---|---|---|---|---|---|---|---|
| A | $SO_2NH_2$ | CH | H | $NH_2$ | H | $SO_2C_6H_5$ | — | — | — | 37 |
| B | $NO_2$ | CH | H | $NH_2$ | H | H | 679 | 95 | 5 | — |
| C | $NO_2$ | CH | COOH | $NH_2$ | H | H | 679 | 79 | — | — |
| D | $NO_2$ | CH | H | $NH_2$ | H | Br | — | — | — | — |
| E | $NO_2$ | CH | H | $NH_2$ | H | $SO_2C_6H_4$-$p$-$CH_3$ | 700 | — | — | — |

TABLE I CONTINUED

| Cmpd. | E | L | X | D | Z | W | Spectrum of Ni-Dye Complex $\lambda_{max}$ (nm) | HBW (nm) | % Fade | Dye Diffusion $t_{1/2}$ (sec) |
|---|---|---|---|---|---|---|---|---|---|---|
| F | $NO_2$ | CH | H | $NH_2$ | H | $SO_2C_6H_4$-*p*-$OSO_2CH_3$ | — | — | — | — |
| G | $NO_2$ | CH | H | $NH_2$ | H | $SO_2C_6H_4$-*p*-OH | 695 | 158 | — | — |
| H | $NO_2$ | CH | H | OH | H | H | — | — | — | — |
| I | $SO_2CH_3$ | CH | H | $NH_2$ | H | $SO_2C_6H_4$-*m*-$S_2NHCH(CH_3)_2$ | 650 | 91 | — | 46 |
| J | H | N | H | $NH_2$ | $CH_3$ | $SO_2C_6H_4$-*m*-$SO_2NH_2$ | 647 | 107 | 9 | 30 |
| K | $SO_2NH_2$ | CH | H | $NH_2$ | $CH_3$ | $SO_2C_6H_4$-*p*-$CH_3$ | 650 | — | — | — |
| *K′ | $SO_2NH_2$ | CH | H | $NH_2$ | $CH_3$ | $SO_2C_6H_4$-*p*-$CH_3$ | 635 | 110 | — | — |

*Premetallized compound, alternative receiving element

TABLE I CONTINUED

| Cmpd. | E | L | X | D | Z | W | Spectrum of Ni-Dye Complex $\lambda_{max}$ (nm) | HBW (nm) | % Fade | Dye Diffusion $t_{1/2}$ (sec) |
|---|---|---|---|---|---|---|---|---|---|---|
| L | $SO_2NH_2$ | CH | H | $NH_2$ | $CH_3$ | $SO_2C_6H_3$-*m*-$SO_2NH_2$ | 625 | 110 | — | — |
| *L' | $SO_2NH_2$ | CH | H | $NH_2$ | $CH_3$ | $SO_2C_6H_3$-*m*-$SO_2NH_2$ | 625 | 120 | — | — |
| **M | $NO_2$ | CH | $CHN_4$ | $NH_2$ | H | H | 677 | 126 | — | — |
| N | $SO_2NH_2$ | CH | H | $NH_2$ | $CH_3$ | Cl | — | — | — | — |
| O | $SO_2(CH_2)_2$—COOH | CH | COOH | $NH_2$ | $CH_3$ | $SO_2C_6H_3$-*m*-$SO_2NH_2$ | 664 | 91 | 10 | 44 |
| P | $SO_2(CH_2)_2$—COOH | CH | H | $NH_2$ | $CH_3$ | $SO_2C_6H_3$-*m*-$SO_2NH_2$ | 659 | 92 | 11 | 39 |

*Premetallized compound, alternative receiving element
**5-tetrazolyl

TABLE I CONTINUED

| Cmpd. | E | L | X | D | Z | W | Spectrum of Ni-Dye Complex $\lambda_{max}$ (nm) | HBW (nm) | % Fade | Dye Diffusion $t_{1/2}$ (sec) |
|---|---|---|---|---|---|---|---|---|---|---|
| Q | $SO_2C_2H_5$ | CH | COOH | $NH_2$ | $CH_3$ | $SO_2C_6H_4$-*m*-$SO_2NH_2$ | 660 | 95 | 8 | 47 |
| R | $SO_2CH_2$-*m*-$C_6H_4OH$ | CH | COOH | $NH_2$ | $CH_3$ | $SO_2C_6H_4$-*m*-$SO_2NHC_3H_7$-*i* | 667 | 92 | 8 | 59 |
| S | $SO_2CH_2$-*m*-$C_6H_4OH$ | CH | COOH | $NH_2$ | H | $SO_2C_6H_4$-*m*-$SO_2NHC_3H_7$-*i* | 651 | 93 | 6 | 55 |
| T | $SO_2CH_2$-*m*-$C_6H_4OH$ | CH | COOH | $NH_2$ | $CH_3$ | $SO_2CH_3$ | 662 | 100 | 10 | 49 |
| U | $SO_2CH_2$-*m*-$C_6H_4OH$ | CH | COOH | $NH_2$ | H | $SO_2CH_3$ | 648 | 97 | 7 | 44 |
| V | $SO_2CH_2$-*m*-$C_6H_4OH$ | CH | COOH | $NH_2$ | $CH_3$ | Br | — | — | — | — |

TABLE I CONTINUED

| Cmpd. | E | L | X | D | Z | W | Spectrum of Ni-Dye Complex $\lambda_{max}$ (nm) | HBW (nm) | % Fade | Dye Diffusion $t_{1/2}$ (sec) |
|---|---|---|---|---|---|---|---|---|---|---|
| W | $SO_2CH_2$-*m*-$C_6H_4OH$ | CH | COOH | $NH_2$ | H | Br | — | — | — | — |
| X | 5-$SO_2(CH_2)_2$—COOH | CH | COOH | $NH_2$ | $CH_3$ | $SO_2$-*p*-$C_6H_4OH$ | 664 | 95 | 2.5* | 57 |
| Y | 5-$SO_2(CH_2)_2$—COOH | CH | COOH | $NH_2$ | H | $SO_2C_6H_4$-*m*-$SO_2NH_2$ | 645 | 100 | 11 | 56 |

*This fade test was 7 weeks, 5.4 Klux simulated northern skylight illumination at room temperature.

Example 2
Comparative Spectra

Example 1 was repeated to obtain spectrophotometric data on mordanted strips for the following:

a) a 2:1 nickel complex of 2-amino-5-isopropyl-sulfamoyl-6-(3-carboxy-5-*m*-hydroxybenzoyl-2-thienyl-azo)-3-pyridinol, the chromophore of which is Dye J of European Publication No. 0063808 (Control Dye 1);

b) a 2:1 nickel complex of 2-amino-5-*p*-tolyl-sulfonyl-6-(5-chloro-2-hydroxy-4-sulfamoylphenylazo-3-pyridinol, the chromophore of which is a dye of the class described in U.S. Patent 4,142,891 (Control Dye 2); and

c) a 2:1 nickel complex of Compound Q.

The absorption of each of the metallized dyes is described by the wavelength, $\lambda_{max}$, at the actual $D_{max}$, and the halfband width (HBW) which is the band width at half the $D_{max}$. The following results were obtained.

TABLE II

| | $\lambda_{max}$ (nm) | HBW (nm) |
|---|---|---|
| Control Dye 1 | 660 | 124 |
| Control Dye 2 | 660 | 135 |
| Compound Q | 660 | 95 |

The above results indicate that the metal dye complex of the invention has substantially narrower band width and less unwanted absorption than either of the prior art metallized dyes. It will therefore provide a more accurate color reproduction than these broader absorbing metallized dyes of the prior art.

Synthesis of Released Dye Compound A

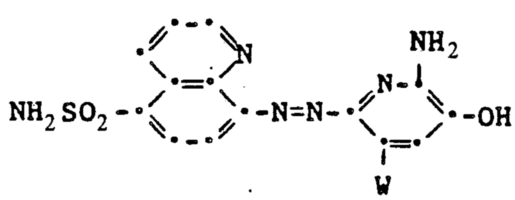

Compound A, W is $SO_2C_6H_5$
Compound A—1, W is Br

A dimethylformamide (DMF) solution of the bromo dye, Compound A—1 (1.0 g) and sodium benzenesulfinate (1.0 g) were stirred overnight at room temperature. On dilution with water the sulfone-substituted dye precipitated. It was collected by filtration washed with water and dried, m.p. 272—275°C. The structure was confirmed by infrared, NMR and mass spectrometry.

Intermediates
The Bromo dye, Compound A—1

8-Amino-5-quinolinesulfonamide (1.2 g) in 5 ml trifluoroacetic acid was cooled to 0°C, isopentyl nitrite (0.63 ml) added and stirred for 15 min. The mixture was poured into a solution of sodium acetate (7 g) and 2-amino-5-bromo-3-pyridinol (1.5 g) in 300 ml methanol cooled in a dry ice-acetone bath. Rapid coupling occurred. The solution was concentrated *in vacuo*, diluted with water and filtered to yield 1.42 g, m.p. 205—210°C.

8-Amino-5-quinolinesulfonamide

Gaseous ammonia was bubbled into a cold solution of 8-acetamido-5-quinolinesulfonyl chloride (20.0 g, 0.07 mole) in 350 ml tetrahydrofuran (THF) for 15 min. The resulting solid was filtered, washed with THF and air dried to yield 21.0 g (100 percent, contaminated with ammonium chloride $NH_4Cl$). (A sample was washed with water to remove the ammonium chloride yielding the relatively pure acetamido derivative dye, m.p. 270—272°C.)

The acetamido derivative dye above was slurried in 440 ml water and 60 ml conc. HCl. This reaction mixture was heated at reflux for 45 minutes, cooled to room temperature and neutralized with sodium hydroxide to pH 8. After chilling for 1 hr. a precipitated solid was recovered by filtration and recrystallized from THF-ethanol (1:1 by volume) to yield 12.6 g (about 80 percent) of the aminosulfonamide as pale yellow crystals, m.p. 218—219°C.

8-Acetamido-5-quinolinesulfonyl chloride

In a 1 liter 3-neck round bottom flask fitted with a mechanical stirrer and a calcium chloride drying tube, phosphorus oxychloride (360 ml) was added and chilled to less than 10°C. N-methylpyrrolidone (20 ml) was

then added (slight exotherm). When the temperature returned to <5°C, finely ground pyridinium 8-acetamido-5-quinolinesulfonate (36.0 g, 0.104 mole) was added. The reaction mixture was chilled in ice and stirred for 20 hrs. The resulting brown slurry was slowly added to 2500 ml ice/water (cooled by an external ice-salt bath) with vigorous stirring. After stirring for one hour the precipitated product was collected by filtration and yielded 27.9 g (94 percent) of a tan powder, m.p. 203—204°C (decomp.).

Pyridinium 8-acetamido-5-quinolinesulfonate

To a 2 liter, 3-neck round bottom flask fitted with a reflux condenser were added 97.2 g (0.4 mole) 8-hydroxyquinoline-5-sulfonic acid, sodium bisulfite (83.2 g, 0.8 mole), 400 ml distilled water and 200 ml concentrated aqueous ammonia solution. The rsulting slurry was heated at reflux for 88 hrs. during which time the reaction mixture became a clear orange solution. After cooling to room temperature, the reaction mixture was acidified (20 ml conc. HCl), chilled and the resulting precipitate was collected by filtration. An additional 10 ml conc. HCl was added to the filtrate which was chilled and then filtered. The combined air dried filter cakes were dissolved in 300 ml pyridine, chilled in an ice bath and 60 ml acetic anhydride added dropwise. The solid, which slowly precipitated following the anhydride addition, was collected by filtration, washed with cold pyridine and THF and air dried to yield 48.8 g (35 percent).

## Synthesis of Compound 14

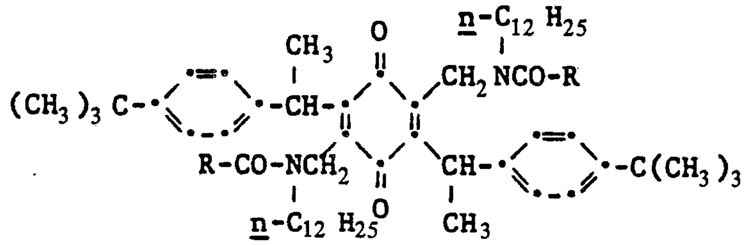

wherein R is

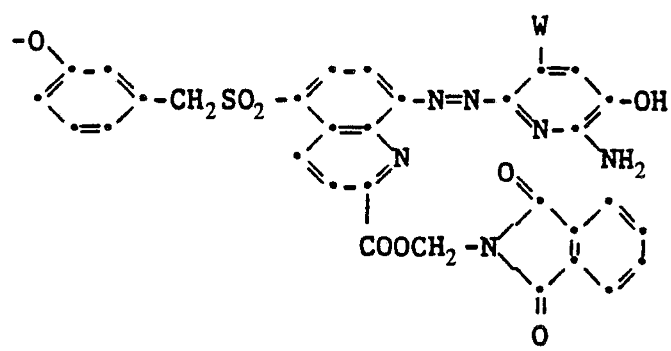

wherein W is

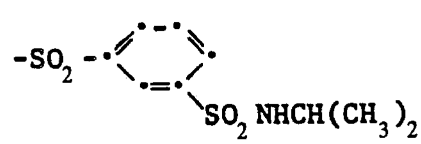

A solution of sodium *m*-isopropylsulfamoylbenzenesulfinate (0.86 g, 3 mmol) in 10 ml water (pH adjusted to 6) was added to a solution of Compound 14A (1.18 g, 0.5 mmol) dissolved in 100 ml dimethylformamide (DMF) containing <1 ml acetic acid. Compound 14A is Compound 14 where W is Br. The mixture was stirred for 2 hrs. during which time it turned from red to deep magenta. It was poured slowly with stirring into 500 ml water containing a few drops of HCl. After stirring for 30 min., the precipitated solid was filtered, washed with water and dried to yield 1.22 g (91 percent). This crude dye was purified by dissolving in ethyl acetate, washing several times with aqueous sodium persulfate ($Na_2S_2O_8$) (to reoxidize any hydroquinone which may have been reduced by the sulfinic acid), washing with water, and drying over magnesium sulfate. The dye was reprecipitated by adding to 500 cc methanol, the magenta solid filtered and dried to yield 0.90 g. A thin chromatogram showed primarily a single spot.

Synthesis of Compound 14A

Compound 14A is Compound 14 wherein W is Br

Compound 14B (1.91 g, 1.0 mmole) was dissolved in 30 ml of chilled trifluoroacetic acid. Isopentyl nitrite (0.3 g, 2.5 mmole) was added over one minute to diazotize the amine. This solution was then added dropwise over 5 min. to a solution of 2-amino-5-bromo-3-pyridinol (0.76 g, 4.1 mmole) in 700 ml methanol, containing 30 g sodium acetate and then cooled in a Dry Ice bath to −30°C. The red azo dye, which separated from the solution upon stirring for 15 min. was filtered, washed with methanol and dried. The crude product was dissolved in 40 ml dichloromethane, filtered and slowly added to 500 ml methanol. The resulting precipitated solid was filtered, washed with methanol and dried to yield 1.70 g (74 percent).

## Intermediates

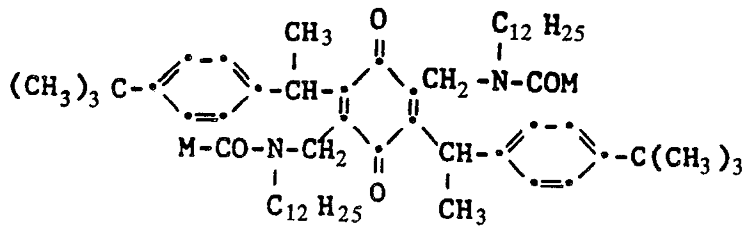

Compound 14B, M is

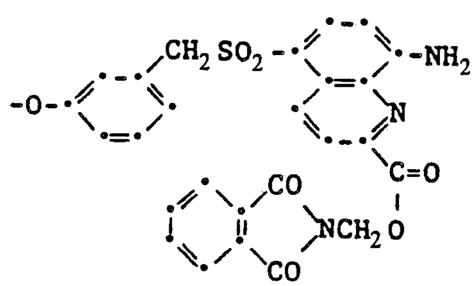

Compound 14C, M is Cl.

Compound 14B

To a stirred solution of phthalimidomethyl 8-amino-5-(*m*-hydroxybenzylsulfonyl)-2-quinolinecarboxylate (1.19 g, 2.3 mmole) was added successively diisopropylethylamine (0.31 g, 2.4 mmole) and the solid acid chloride Compound 14C (0.95 g, 1.0 mmole). After stirring overnight at room temperature (protected by a drying tube), the solution was poured over excess ice and hydrochloric acid, stirred 20 min. and filtered. The precipitate was washed with water and dried in vacuo at 40°C. It was chromatographed on silica gel with dichloromethane, eluting with 3:1 dichloromethane:ethyl acetate. The residue upon evaporation was stirred in methanol, filtered and dried, yielding 1.18 g (62 percent).

Phthalimidomethyl 8-amino-5-(*m*-hydroxybenzylsulfonyl)-2-quinolinecarboxylate

The phthalimidoester was prepared by stirring together overnight 8-amino-5-(*m*-hydroxybenzylsulfonyl-2-quinolinecarboxylic acid (1.08 g, 3 mmole), 20 ml dry dimethylformamide, dicyclohexylamine (0.55 g, 3 mmole), and N-chloromethylphthalimide (0.60 g, 3 mmole). The mixture was poured into 400 ml water. The yellow product was filtered off, washed with water, and dried to give 1.43 g (92 percent). The end product was recrystallized from 500 ml acetonitrile using decolorizing charcoal and concentrating the filtrate to 1/6 its original volume, m.p. 242°C dec., 1.24 g (80 percent).

8-Amino-5-(*m*-hydroxybenzylsulfonyl)-2-quinolinecarboxylic acid

8-Acetamido-5-(*m*-acetoxybenzylsulfonyl)-2-quinolinecarbonitrile (2.12 g, 5 mmole) was heated overnight with a mixture of conc. sulfuric acid (50 g), water (50 g) and sodium chloride (5 g). The resulting mixture was then poured into 400 ml water and ice. This solution was made basic with solid sodium hydroxide, filtered to remove traces of solid, adjusted with stirring to pH 2 with hydrochloric acid, and chilled in an ice bath for 30 min. with continual stirring. The precipitated product was filtered, washed with water and dried. On recrystallization from dioxane, the yellow crystals, melting at 237—239°C, retained dioxane in crystallization.

8-Acetamido-5-(*m*-acetoxybenzylsulfonyl)-2-quinolinecarbonitrile

8-Acetamido-5-(*m*-acetoxybenzylsulfonyl)-quinoline-N-oxide (4.14 g) and dimethyl sulfate (25 ml) were heated together for 15—20 min. in an oil bath at 75—80°C. The homogeneous solution was then cooled and

treated with ether and water (400 ml each) in a separatory funnel. The ether layer was separated and washed with water. The aqueous layers were combined, washed with ether and filtered through a sintered glass funnel. The aqueous solution was cooled with ice to 10°C and sodium cyanide (2 g) was added with stirring. The product separated during a 30 min. stirring period and was recovered by filtration, washed with water and dried, yielding 3.0 g crude product. On recrystallization from toluene containing 5—10 percent acetic anhydride, 2.56 g (61 percent) of pale yellow product was obtained, m.p. 229—231°C.

8-Acetamido-5-(*m*-acetoxybenzylsulfonyl)quinoline-N-oxide

8-Acetamido-5-(*m*-acetoxybenzylsulfonyl)quinoline (3.98 g, 10 mmole) was dissolved in 30 ml of dichloromethane and treated with *m*-chloroperbenzoic acid (2.03 g). The solution was stirred for 3 days at room temperature. Some *m*-chlorobenzoic acid which separated was removed by filtration and the filtrate concentrated to a syrup. On boiling with 40 ml 2-propanol a pale yellow solid precipitated. After chilling in an ice bath, the solid was filtered, washed with a mixture of 2-propanol and ether (1:1 by volume), and dried to yield 3.8 g (92 percent). The structure was confirmed by NMR.

8-Acetamido-5-(*m*-acetoxybenzylsulfonyl)quinoline

8-Acetamido-5-quinolinesulfinic acid (10 g, 40 mmole), *m*-(bromomethyl)phenyl acetate (11 g, 44 mmole), sodium bicarbonate (5 g) and dry dimethylformamide (50 ml) were mixed and heated on the steam bath for 1 1/2 hours. The mixture was slowly poured into 800 ml of water and the mixture stirred for 30 min. The precipitated solid was filtered, washed with water, and air-dried overnight. Yield 15.8 g (99 percent) of product, m.p. 179—182°C. A sample recrystallized from toluene, melted 180—182°C.

*m*-(Bromomethyl)phenyl acetate

*m*-Hydroxybenzyl alcohol (37.2 g, 0.3 mole) was dissolved in 100 ml pyridine and acetic anhydride (81.7 g, 0.8 mole) added to the stirred solution as the temperature rose to 70°C. After stirring for 30 minutes the solution was poured over ice and hydrochloric acid. The oily product was separated and the aqueous solution shaken twice with dichloromethane. The oil and dichloromethane extracts were combined and washed with sodium bicarbonate solution, water, dilute acid and water again. The extract was dried over magnesium sulfate, filtered, and the solvent evaporated, yielding 55.7 g crude oil (87 percent).

This oil was then treated with 150 g of 30—32 percent hydrogen bromide in acetic acid for 10 min. and then 25 ml acetic anhydride was added. The mixture was allowed to stand overnight ata room temperature. The solution was evaporated under reduced pressure to an oil. The oil was dissolved in dichloromethane and washed in turn with water, aqueous sodium bicarbonate and water. The dichloromethane solution was dried with magnesium sulfate, filtered and evaporated. On standing in a refrigerator for a week the oil finally crystallized.

8-Acetamido-5-quinolinesulfinic acid

8-Acetamido-5-quinolinesulfonyl chloride (56.9 g, 0.2 mole) (see Synthesis of Released Dye Compound A, above) was added to a stirred room temperature solution of sodium sulfite (50.4 g, 0.4 mole) and sodium bicarbonate (33.6 g, 0.4 mole) in 500 ml of water. Stirring was continued for 3 hours while the reaction proceeded and the solids were dissolved. The mixture was then filtered.

The aqueous filtrate was then adjusted to pH 2 with 60 ml conc. hydrochloric acid. The stirred solution was then degassed by bubbling nitrogen through it for 3 hours to remove the carbon dioxide and sulfur dioxide. During this time the sulfinic acid product separated. Some experimentation with adjustment of pH may be necessary to effect crystallization of the product.

When substantial amounts of product had separated, the mixture was cooled to 10°C with stirring and the product filtered, washed with small amounts of water (10 ml), and then washed with acetone. After air drying, the yields in several preparations were 30—40 g (60—80 percent). The product is not stable to recrystallization but as isolated is satisfactory for use in subsequent reactions.

Synthesis of Compound 25

The bromo substituted dye, Compound Z (5.97 g 4.84 mmol) (identified below), dry dimethylformamide, (DMF) (125 ml), and sodium *m*-sulfamoylbenzenesulfinate (1.25 g, 5.1 mmol) were stirred together for 1.5 hours. Upon dilution with 400 ml water, the product precipitated, was filtered, washed and dried, yielding 6.36 g of Compound 25 ligand. The 1:2 nickel complex was prepared by dissolving 2.80 g of the ligand in 100 ml DMF with stirring and adding nickel acetate (0.25 g) in 10 ml DMF. After stirring for one hour, the mixture was diluted with 500 ml water, and the precipitate recovered by filtration and dried. The yield was 3.23 g.

Intermediates:

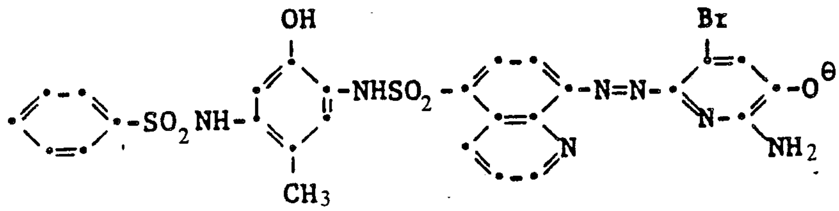

A. Compound Z

A solution of 2-(8-amino-5-quinolinesulfonamido)-4-methyl-5-(*m*-dioctadecylcarbamoylbenzenesulfonamido)phenol hydrochloride (6.41 g, 6 mmol) in trifluoroacetic acid (65 ml) was chilled to 0°C. Isopentyl nitrite (0.70 g, 6 mmol) was added dropwise; and the mixture was stirred for 30 minutes. 5-Bromo-2-amino-3-pyridinol (1.13 g, 6 mmol), dissolved in 75 ml methanol and 100 ml THF, and excess sodium acetate were added and the mixture was stirred for 2 hours. On dilution with water, the dye precipitated. It was recovered by filtration, washed with water and dried, yielding 6.87 g. It was used without purification in the next step.

B. 2-(8-Amino-5-quinolinosulfonamido)-5-(*m*-dioctadecylcarbamoylbenzenesulfonamido)-*p*-cresol hydrochloride

2-Amino-5-(*m*-dioctadecylcarbamoylbenzenesulfonamido-*p*-cresol hydrochloride (4.0 g, 4.6 mmol) was stirred in a dichloromethane slurry. 8-Acetamido-5-quinolinesulfonyl chloride (1.75 g) slurried in 20 ml dichloromethane under a nitrogen atmosphere, pyridine (0.73 g) and THF (20 ml) were added, dissolving the reactants, and the mixture stirred overnight. The reaction mixture was concentrated *in vacuo* to an oil which solidified in an ice bath. The solid (6.29) was dissolved in 650 ml of boiling acetonitrile. The reaction mixture was filtered and the filtrate chilled. The precipitated product was filtered yielding 4.1 g of the 2-acetamido product, melting at 165°C with prior softening.

The acetamido compound (2.0 g, 1.8 mmol) was hydrolyzed by saturating 500 ml methanol with gaseous hydrogen chloride and refluxing gently for 1 hour. The mixture was chilled, filtered, and the recovered product dried to yield 1.82 g yellow solid.

Attention is directed to co-filed and co-pending EP—A—0095324 which discloses and claims a photographic recording material which comprises a nondiffusible dye image-providing compound capable of releasing a diffusible 8-(2-heterocyclylazo)5-quinolinol magenta dye moiety.

## Claims

1. A photographic recording material comprising at least one photosensitive silver halide emulsion layer having associated therewith a dye image-providing material comprising a nondiffusible compound containing a ballasted carrier moiety which is capable of releasing, under alkaline conditions, at least one diffusible cyan dye moiety comprising a 6-heterocyclylazo-3-pyridinol, said dye image-providing material having the following formula:

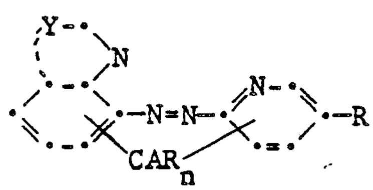

wherein

the pyridinol ring may be unsubstituted or substituted;

(a) Y represents the atoms necessary to complete a 9- or 10-membered aromatic heterocyclic fused ring system which can be unsubstituted or substituted; with the proviso that the carbocyclic ring of said heterocyclylazo moiety is free of hydroxy groups, or precursors thereof, in the position para to the azo group;

(b) CAR represents a ballasted carrier moiety capable of releasing the diffusible cyan dye moiety as a function of development of the silver halide emulsion layer under alkaline conditions;

(c) R represents a hydroxy group, a salt thereof, or a hydrolyzable precursor thereof, or CAR which is linked to the dye moiety through an oxygen atom thereon; and

(d) n is 0, 1 or 2 with the proviso that when n is 0, then R is CAR which is linked to the dye moiety through an oxygen atom thereon.

2. A photographic recording material according to claim 1 characterized in that said dye image-providing compound comprises a coordination complex of said nondiffusible compound and a polyvalent metal ion.

3. A photographic recording material according to claim 1 characterized in that R is hydroxy and said fused ring has an electron-withdrawing substituent para to the azo group, said substituent being nitro or $SO_2J$, wherein J is amino, alkoxy, aryloxy, alkyl or aryl.

4. A photographic recording material according to claim 1 characterized in that R is hydroxy and Y represent the atoms necessary to complete a quinoline, quinoxaline, benzimidazole or indolenine ring.

5. A photographic recording material according to claim 1 characterized in that said material also comprises a dye-image receiving layer.

6. A photographic recording material according to claim 5 characterized in that said material also contains metal ions in said dye image-receiving layer or in a layer adjacent thereto.

**Patentansprüche**

1. Photographisches Aufzeichnungsmaterial mit mindestens einer photosensitiven Silberhalogenidemulsionsschicht, der eine ein Farbstoffbild liefernde Substanz aus einer nicht-diffundierenden Verbindung mit einem Ballast-Trägerrest, die unter alkalischen Bedingungen mindestens einen diffundierenden Blaugrünfarbstoff mit einer 6-Heterocyclylazo-5-pyridinolgruppierung freizusetzen vermag, zugeordnet ist, die der folgenden Formel entspricht:

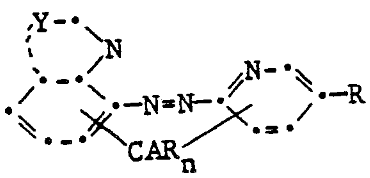

in der der Pyridinolring unsubstituiert oder substituiert sein kann und in der bedeuten:

(a) Y die zur Vervollständigung eines 9- oder 10-gliedrigen aromatischen heterocyclischen kondensierten Ringsystems, das unsubstituiert oder substituiert sein kann, erforderlichen Atome, wobei gilt, daß der carbocyclischen Ring der Heterocyclylazogruppierung von Hydroxygruppen oder Vorläufergruppen hiervon in der para-Stellung zur Azogruppe frei ist;

(b) CAR einem Ballast-Trägerrest, der den diffundierenden Blaugrünfarbstoff als Folge der Entwicklung der Silberhalogenidemulsionsschicht unter alkalischen Bedingungen freizusetzen vermag;

(c) R eine Hydroxygruppe, ein Salz hiervon oder eine hydrolysierbare Vorläufergruppe hiervon, oder eine CAR-Gruppierung, die an den Farbstoffrest über ein Sauerstoffatom am Farbstoffrest gebunden ist und

(d) n gleich 0, 1 oder 2, wobei gilt, daß, wenn n gleich 0 ist, R die Bedeutung einer CAR-Gruppierung hat, die an den Farbstoffrest durch ein Sauerstoffatom an diesen Rest gebunden ist.

2. Photographisches Aufzeichnungsmaterial nach Anspruch 1, dadurch gekennzeichnet, daß die ein Farbstoffbild liefernde Verbindung ein Koordinationskomplex aus der nicht-diffundierenden Verbindung und einem polyvalenten Metallion ist.

3. Photographisches Aufzeichnungsmaterial nach Anspruch 1, dadurch gekennzeichnet, daß in der angegebenen Formel R für eine Hydroxygruppe steht und der kondensierte Ring einen Elektronen abziehenden Substituenten in para-Stellung zur Azogruppe hat, wobei der Substituent ein Nitrorest oder ein Rest der Formel $—SO_2J$ ist, ider J für einen Amino-, Alkoxy-, Aryloxy-, Alkyl- oder Arylrest steht.

4. Photographisches Aufzeichnungsmaterial nach Anspruch 1, dadurch gekennzeichnet, daß R für eine Hydroxygruppe steht und Y für die Atome, die zur Vervollständigung eines Chinolin-, Chinoxalin-, Benzimidazol- oder Indoleninringes erforderlich sind.

5. Photographisches Aufzeichnungsmaterial nach Anspruch 1, dadurch gekennzeichnet, daß das Material eine Farbbildempfangsschicht aufweist.

6. Photographisches Aufzeichnungsmaterial nach Anspruch 5, dadurch gekennzeichnet, daß das Material in der Farbbildempfangsschicht oder in einer hierzu benachbarten Schicht Metallionen aufweist.

**Revendications**

1. Produit d'enregistrement photographique comprenant au moins une couche d'émulsion aux halogénures d'argent photosensibles à laquelle est associée une substance formatrice d'image de colorant comprenant un composé non diffusible, contenant un groupe porteur ballasté apte à libérer, en milieu alcalin, au moins un groupement colorant bleu-vert diffusible comprenant un groupe 6-hétérocyclylazo-3-pyridinol, cette substance formatrice d'image de colorant ayant la formule suivante:

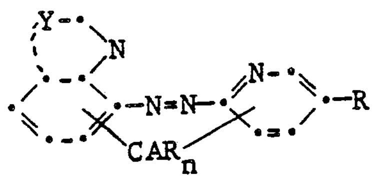

où le noyau pyridinol peut être substitué ou non;

(a) Y représente les atomes nécessaires pour compléter un système de noyaux condensés hétérocycliques aromatiques à 9 ou 10 chaînons qui peuvent être susbtitués ou non, à la condition que le noyau carbocyclique du groupement hétérocyclylazo soit libre de groupes hydroxyle ou de précurseurs de ces derniers, en position para par rapport an groupement azo;

(b) CAR représente un groupement porteur ballasté apte à libérer le groupement colorant bleu-vert diffusible en fonction du développement de la couche d'émulsion aux halogénures d'argent en milieu alcalin;

(c) R représente un groupe hydroxyle, un sel de ce dernier ou un précurseur hydrolysable de ce groupe ou bien le groupement CAR qui est attaché au groupement colorant par l'intermédiaire d'un atome d'oxygène de ce dernier;

(d) n est 0, 1 ou 2, à la condition que, lorsque n est 0, R est le groupement CAR qui est attaché au groupement colorant par l'intermédiaire d'un atome d'oxygène de ce dernier.

2. Produit d'enregistrement photographique conforme à la revendication 1, caractérisé en ce que le composé formateur d'image de colorant comprend un complexe de coordination du composé non diffusible et d'un ion métallique plyvalent.

3. Produit d'enregistrement photographique conforme à la revendication 1, caractérisé en ce que R est un groupe hydroxyle et le noyau condensé porte un substituant attracteur d'électrons en position para par rapport au groupe azo, ce substituant étant un groupe nitro ou $SO_2J$ où J est un groupe amino, alkoxy, aryloxy, alkyle ou aryle.

4. Produit d'enregistrement photographique conforme à la revendication 1, caractérisé en ce que R est un groupe hydroxyle et Y représente les atomes nécessaires pour compléter un noyau quinoléine, quinoxaline, benzimidazole ou indolénine.

5. Produit d'enregistrement photographique conforme à la revendication 1, caractérisé en ce qu'il comprend aussi une couche réceptrice d'image de colorant.

6. Produit d'enregistrement photographique conforme à la revendication 5, caractérisé en ce qu'il comprend aussi des ions métalliques qui se trouvent dans la couche réceptrice d'image de colorant ou dans une couche adjacente à celle-ci.